# EUROPEAN PATENT APPLICATION

(11) **EP 2 603 015 A1**
(43) Date of publication of application: **12.06.2013**
(21) Application number: 11192071.6
(22) Date of filing: 06.12.2011
(51) Int. Cl.: H04N 21/6543, H04N 21/2362, H04N 21/262

(54) **Automatic channel change based on received metadata**

(71) Applicant: Eldon Technology Limited, Steeton, Keighley BD20 6QW (GB)
(72) Inventor: Mountain, Dale Llewelyn, Keighley, Yorkshire BD20 0DQ (GB)
(74) Representative: Sadler, Peter Frederick

(57) **Abstract**

A method for controlling a user device, for receiving broadcast media content and outputting it for presentation to a user, is provided. The method comprises, at the user device receiving and outputting a first portion of a broadcast media content programme, wherein a second portion of the media content programme is subsequently broadcast on a second channel. Programme metadata is received identifying: that the first portion of the media content programme is continued as a second portion of the media content programme; the second channel on which the second portion of the media content programme is to be broadcast; and a time at which the second portion of the media content programme begins. The method further comprises automatically controlling the user device, based on the received metadata, to receive via broadcast, and output, the second channel to output the second portion of the media content programme. A corresponding set top box and computer program are also provided.

## Description

### FIELD OF THE INVENTION

The present invention relates to a method for automatically controlling the output of content from a user device such as a set-top-box.

### BACKGROUND OF THE INVENTION

User devices are known for receiving broadcast media content, such as television programmes, decoding the broadcast and outputting the media content to a display device or recording the media content to a recording medium. Such user devices are often referred to as set-top-boxes (STBs).

As is known in the art, media content is typically broadcast on a plurality of separate channels, each including distinct media content, or programmes. Each channel contains a particular programme being broadcast contemporaneously with other programmes on other channels. Conventionally a "channel" corresponded to a particular broadcast frequency to which a tuner within the STB tuned to in order to receive the content contained therein. When dealing with digital arrangements, such as MPEG-2 implementations, this may not be the case as many programmes may be transmitted as a number of unconnected packets, and the RF "channels" may be a means of multiplexing transport streams, or collections of channels, and not transmitting individual programmes or events. To reconstruct an event or programme from the individual transport packets, a channel is selected and extracted in the manner known in the art. Therefore, a "channel" will be understood to include a sequence of programmes or events intended to be shown sequentially to viewers, the sequence of programmes or events being coordinated by a broadcaster. Channels are typically identified by a name and a channel number, which may vary depending upon service providers.

In modern broadcasting arrangements additional metadata is sent to the STB containing data describing aspects of the programmes. In particular, the metadata may include programme titles, descriptions, start times, end times and so on. This data is often described as EPG (electronic programme guide) data because it is used by a STB to populate an EPG which provides a graphical interface for the user to access data for current and future programmes.

A particular problem that occurs with modern day broadcasting is that some programmes may need to be shifted from one broadcast channel to another part way through. This may be the case where a programme is too long to be broadcast on a single channel, such as charity telethons, e.g. Children in Need, or where a live programme overruns because, for example, a sporting event runs past its scheduled finish time. This can be problematic when the user is watching or recording the programme in question because it can lead to the portion of the programme on the second channel being missed or not recorded. It is desirable to provide a way of avoiding this situation.

### SUMMARY OF THE INVENTION

The invention is defined in the independent claims to which reference is now directed. Preferred features are set out in the dependent claims.

Embodiments of the invention provide a method for controlling a user device for receiving broadcast media content and outputting it for presentation to a user, such as a set top box. The method comprises receiving, at the user device a first portion of a broadcast media content programme on a first channel, a second portion of the media content programme being subsequently broadcast on a second channel. Programme metadata is received, the programme metadata being indicative of the fact that the first portion of the media content programme is continued as a second portion of the media content programme on a different channel, the metadata also identifying the second channel on which the second portion of the media content programme is to be broadcast and a time at which the second portion of the media content programme begins. The method further comprises automatically controlling the user device based on the received metadata to receive, via broadcast, and output the second portion of the media content programme.

The media content may be received via a tuner within the user device and control of the user device may be achieved by controlling the tuner to automatically tune from the first channel to the second channel on which the second portion of the media content programme is output, as identified by the metadata.

Preferably tuning to the second channel occurs at a time specified by, or determined in relation to, the time at which the second portion of the programme begins as specified by the metadata.

The received data may be received as part of electronic programme guide metadata, preferably provided according to the DVB-SI standard. In particular, the received data may be contained within an Event Information Table (EIT), and preferably within an extended event descriptor.

The received data may include a data field containing a continuation bit which when set indicates that the media content programme is continued on a second channel, and further containing data fields including the channel on which the media content is to be broadcast and the time at which the broadcast is to begin. However, the continuation bit may not be required, as it can be inferred from the presence of data within the channel or time data fields.

The received media content programmes may be output for presentation to a user, such as on a display or television screen, or output to, or recorded on, a recording medium such as a hard disk drive that may be internal or external to the user device.

The user device is preferably a set top box, and the broadcast media content programme may be a television programme.

Embodiments may also provide a corresponding method for providing programme metadata for use in the method performed at the user device as mentioned above, or described below. The method comprises inserting into one or more programme metadata tables data indicative of the fact that a first portion of a media content programme is continued as a second portion of the media content programme, and inserting data identifying the channel on which the second portion of broadcast media content is to be broadcast and data identifying a time at which the second part of the media content programme begins.

The metadata is preferably inserted into an Event Information Table (EIT), and more preferably into an extended event descriptor located therein.

The method may include inserting, into the one or more metadata tables, a data field containing a continuation bit which when set indicates that the media content programme is continued as a second portion of media content on a second channel, a data field for containing the channel on which the second portion of the media content is to be broadcast and a data field for containing the time at which the broadcast is to begin, the method further comprising, for a particular portion of media content, setting the continuation bit and inserting into the respective data fields the broadcast channel of the second media content portion and the broadcast start time of the second media content portion. The continuation bit may not be needed as the receiving user device can be configured to infer from the presence of data within the channel or time data fields that a programme is continued on a different channel.

Embodiments of the invention may prove a user device such as a set top box for receiving broadcast media content and outputting it for presentation to a user. The set top box is configured to carry out the user device methods described above and below. In particular, the set top box is configured to receive a first portion of a broadcast media content programme on a first channel, wherein a second portion of the media content programme being subsequently broadcast on a second channel. The set top box is further configured to receive programme metadata and to extract from the received metadata data identifying whether the first portion of the media content programme is continued as a second portion of the media content programme and if so, to extract from the received metadata the second channel on which the second portion of the media content programme is to be broadcast and a time at which the second portion of the media content programme begins. The set top box is further configured to automatically tune to the second channel, based on the data extracted from the received metadata, to receive, via broadcast, the second portion of the media content programme.

A corresponding computer programme may be provided which when executed on a set top box as described above or below causes it to undertake the user device methods described above or below.

### BRIEF DESCRIPTION OF THE DRAWINGS

Examples of the invention will now be described in more detail with reference to the drawings in which:
- Figure 1:: is a diagram of a STB which may be used to implement embodiments of the invention;
- Figure 2:: is an example of a schedule of television programmes, the user's experience of which can be improved with embodiments of the present invention;
- Figure 3:: is an example of additional metadata fields inserted into existing metadata, such as EPG metadata, in embodiments of the invention;
- Figure 4:: is the EIT format as provided in the DVB-SI standard;
- Figure 5:: is an extended event descriptor format as used in an EIT of the DVB-SI standard;
- Figure 6:: is a method, implemented in a user device such as a STB, according to embodiments of the present invention; and
- Figure 7:: is a further example of a schedule of television programmes, the user's experience of which may be improved with embodiments of the present invention.

### DETAILED DESCRIPTION OF PREFERRED EMBODIMENTS

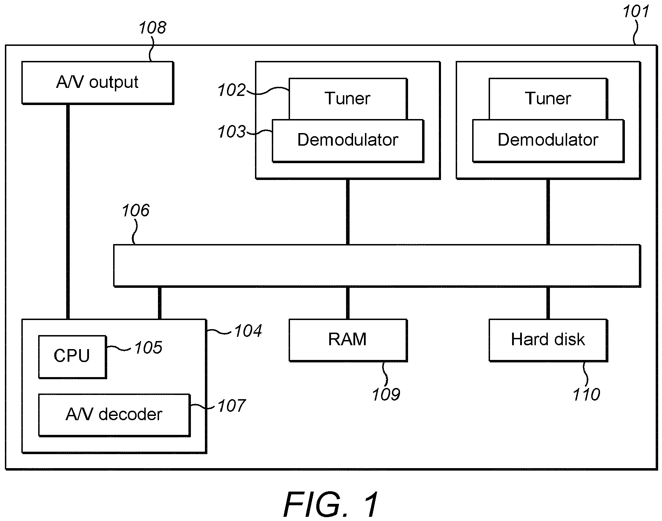

Embodiments of the invention can be implemented using a STB of the sort shown in Figure 1. Broadly speaking a STB comprises an input for receiving broadcast signals including encoded media content, such as video and audio content, via a receiver such as an antenna or satellite dish. A tuner and demodulator may be provided to tune to and amplify a particular broadcast frequency and to demodulate the modulated broadcast signal and convert it into a digital signal for subsequent processing. A processor or processing unit is provided for performing a number of tasks. The processor may include a CPU for running the STB software and for controlling and coordinating the other STB components. The processor also may include an AV decoder, which is responsible for decoding the demodulated audio and video data and providing it to an output unit for subsequent display on a display device such as a television screen. In addition to audio/video data, the STB may also receive, by broadcast or other means such as over the internet or other network connection, metadata relating to a plurality of television programmes. After being decoded, the metadata may be stored by the processor in a memory or store, such as a RAM or hard drive, for subsequent use by the processor when populating an EPG programme or application.

The set-top-box 101 comprises a receiver (not shown) for receiving broadcast signals including encoded media content, such as video and audio content. The media content is provided to a processor for decoding and outputting the content. In the example of Figure 1, a tuner 102 is included that tunes to and amplifies a particular analogue broadcast frequency, although a digital arrangement could be used for receiving digital broadcasts. A demodulator 103 converts the signal from the tuner into a digital signal that may be processed by the processor. A demultiplexor may be required where multiple transport streams are combined on a particular RF channel, as with MPEG-2 based broadcasts. The set-top-box may optionally be equipped to receive and process multiple broadcasts, for example by having more than one tuner/demodulator package, as shown in Figure 1, that can each display/record a television channel simultaneously with another channel.

The tuner/demodulator of the STB of Figure 1 is connected to a processor chip 104, comprising a CPU 105, by a bus 106. The main processor 104 of the set-top-box runs the set-top-box software and controls and coordinates the other set-top-box components. The A/V decoder 107 is a digital processor responsible for decoding the audio and video data and is typically provided on the same physical chip as the CPU. The A/V decoder, which may also be provided as separate audio and video units, receives and decodes the signal provided by the demodulator. The decoded audio/video signals are provided to the AN output 308, which provides an audio and video signal that can be connected to an output device or display device such as a television. The RAM 109 can also be used by both the processor and the decoders. The hard disk 110 is optionally provided for storing recorded content for presentation at a later time. The hard disk can also be used to store metadata used, for example, for Electronic Program Guides (EPGs) or other types of interactive content. Alternatively a flash memory, or any other type of memory, could alternatively, or in addition, be provided for this purpose. STBs of the sort shown in Figure 1 can be used to receive and decode broadcasts sent using many different methods including over the air, via satellite or cable.

Although the STB/receiver circuitry is shown separately to a television/display, it is possible for the two to be combined into a single unit by incorporating the example device of Figure 1 into the display.

Although the set-top-box of Figure 1 is shown with a hard disk for storing recorded media content, making the STB a digital video recorder (DVR), an alternative or additional possibility would be to provide a recording device connected to the AV output 108. Such a recording device would be arranged to receive the AV output and record, therefore, the television programmes being watched by the user.

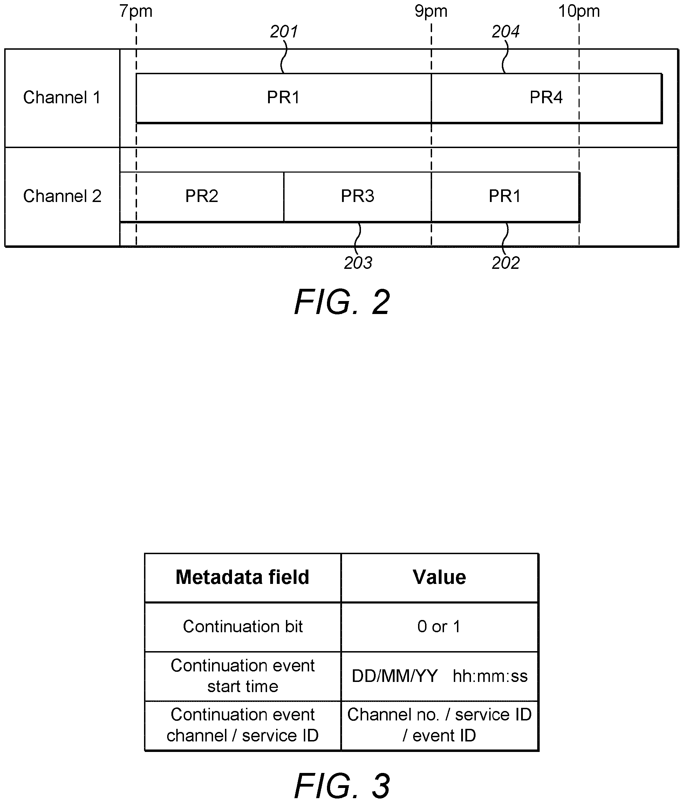

Figure 2 shows a portion of a typical schedule for two channels, channel 1 and channel 2. Of particular interest, for embodiments of the present invention, is programme PR1 201/202. As can be seen from Figure 2, PR1 is output on channel 1 from a start time (7pm) until a subsequent time (9pm) at which point PR1 switches to channel 2. An alternative programme, PR4 204 begins on channel 1 at or near the subsequent time (again, in this example, 9pm). A further programme PR3 203 finishes on channel 2 at 9pm.

The STB processor, and preferably the CPU, is configured to detect that a programme such as PR1 is divided into two portions, each output over a different broadcast channel. In addition, the STB processor determines the start time of the second programme portion, or the end time of the first programme portion, and the associated channel on which the second programme portion is being broadcast. In response to these determinations the processor 104, and preferably the main CPU 105, controls a tuner 102 to tune to the required frequency of the channel on which the second portion of the media content programme PR1 202 is being broadcast at the point at which the second portion of PR1 commences. The CPU may be further configured to control the demultiplexor to extract, from the demodulated signal, the required channel from a multiplex of channels as required. The STB may then output PR1 portion 202 as the AV output to the viewer.

If the viewer was recording PR1 for later viewing as well as, or instead of, viewing it live, the processor 104, and particularly the main CPU, can send the encoded or decoded AV stream of PR1 portion 202 on channel 2 to the recording medium 110, or to an external recording device, from the beginning of PR1 portion 202 instead of continuing to send the AV stream from channel 1. This ensures that the entirety of PR1 is recorded, rather than just portion PR1 201.

In order to allow the STB to determine that PR1 is divided into two or more segments broadcast over two or more distinct channels additional metadata is inserted into the existing metadata, and particularly into the EPG metadata, in the manner described below.

The metadata includes an indicator that a programme, such as PR1, is continued on a different channel to the one it begins on. The STB is configured to check the appropriate metadata field for this indicator for each programme that the user selects to output or record, and to take the appropriate action as described above or below in response to the value of the indictor.

It is possible to define, in EPG metadata, generic data packets which a STB is then programmed or configured to analyse and interpret, or ignore. An example of the metadata that may be used to identify a programme as being continued in different segments is shown in Figure 3. Figure 3 shows a table indicating the possible metadata fields and examples of the values these fields can take. A television programme, or a portion of a television programme known as an "event", has the additional metadata field "continuation bit" associated with it. This field may have a value of 0 or 1 indicating that the programme is continued on a different channel, service or transport stream. The value merely needs to be indicative of the fact that a programme is divided into different portions and the choice of a logic 0 or 1 is merely for convenience. In addition, a metadata field indicative of the start time of the continuation event, or in other words indicative of the start time of the second portion of the television programme, is provided. This would typically be represented as the start time in hours, minutes and seconds of the second portion, and may also include the date in terms of days, months and years, but other appropriate manners of indicating the required time can be used. Alternatively, rather than specifying the start time of the continuation event, the end time of the first event or programme portion may be specified. Furthermore, a field is included to identify the channel on which the continuation event is located. This tells the tuner and/or the demultiplexor which programme within a transport stream to extract for output to a display or recording device. This metadata field may identify a particular channel or service, such as a channel used within the EPG, or a particular sequence of programmes under the control of a single broadcaster, or it could simply provide an identification of the continuation event itself, and the necessary channel ID or service ID details can be determined by the STB CPU by extracting them from received EPG data.

It is possible, in some embodiments, that the only additional metadata field that may need to be provided is the continuation bit. The continuation bit identifies to the STB CPU that a programme is continued on a different channel. From this, the CPU may be configured to determine the start time and channel details of the continuation event based on existing EPG data. For example, the CPU may be configured to search for programmes or events identified by the EPG as being broadcast on different channels by looking for programmes with the matching titles, or other metadata, commencing after the start time of the first portion of the programme. It is, however, preferred to specify the continuation event's start time and an indication of the channel or service ID of the continuation event because this avoids a time delayed broadcast of a channel (for example, a one hour delayed channel) from being mistaken as a continuation event.

EPG metadata format and content varies according to the broadcast standard being employed to transmit the data and the standard of system information (SI) used. Embodiments of the invention will primarily be described in relation to MPEG-2 encoded broadcasts using the Digital Video Broadcasting (DVB) standard, but it will be appreciated that other standards, such as the Japanese Integrated Services Digital Broadcasting (ISDB) or the North American Advance Television Systems Committee (ATSC), could be equally used for embodiments of the invention.

In general, system information can be classified into two categories. The first is system information used primarily by receivers, such as information to de-multiplex and otherwise process the video/audio/data streams. The second is system information used primarily by viewers/users or by the STB user interface. All system information begins with the MPEG-2 defined Program Specific Information (PSI). The PSI comprises the Program Association Table (PAT), the Program Map Table (PMT), the Optional Conditional Access Tables (CAT) and the optional Transport Stream Description Tables. These tables are well known in the art and will not be discussed further. In addition to the basic MPEG-2 defined PSI, there are complementary System Information (SI) technologies that build upon the MPEG-2 PSI. One of these is the DVB Service Information (DVB-SI).

DVB-SI provides data needed to provide identification services and events for the user. The data is structured as nine tables: Bouquet Association Table (BAT); Service Description Table (SDT); Event Information Table (EIT); Running Status Table (RST); Time and Date Table (TDT); Time Offset Table (TOT); Stuffing Table (ST); Selection Information Table (SIT); and Discontinuity Information Table (DIT). The information transmitted by these SI tables is given by descriptors. Each descriptor starts with a "descriptor-tag", which uniquely identifies the type of descriptor, and a "descriptor-length". Different descriptors are used to describe information carried by different SI tables.

Using a SI system such as DVB-SI increases the amount of metadata that can accompany a particular television program for use in populating an EPG. The short event descriptor, located within the EIT, provides a data field containing the name of the program along with a short description of the program in text form. The extended event descriptor, also located within the EIT, can provide a detailed text description of a program and other user defined data. Multiple extended event descriptors can be used if necessary. According to the DVB-SI standard, text and data information can be structured into two columns, one giving an item description field, or data field, and the other providing the accompanying data. These data fields may be used, for example, to include program title, starring actors, director, program category and so on. Thus programs can be broadcast to a media device such as a STB with accompanying metadata, including various data fields and accompanying program data about a given program.

As mentioned above, metadata may be provided in a number of ways. Embodiments of the invention may rely on searching metadata of the sort used to populate an EPG. The metadata may be broadcast to the STB and stored in local memory such as RAM or a hard disk drive. Alternatively, the metadata may be stored at a remote location, such as a remote server, and communicated to the STB over a connection such as an internet connection when required.

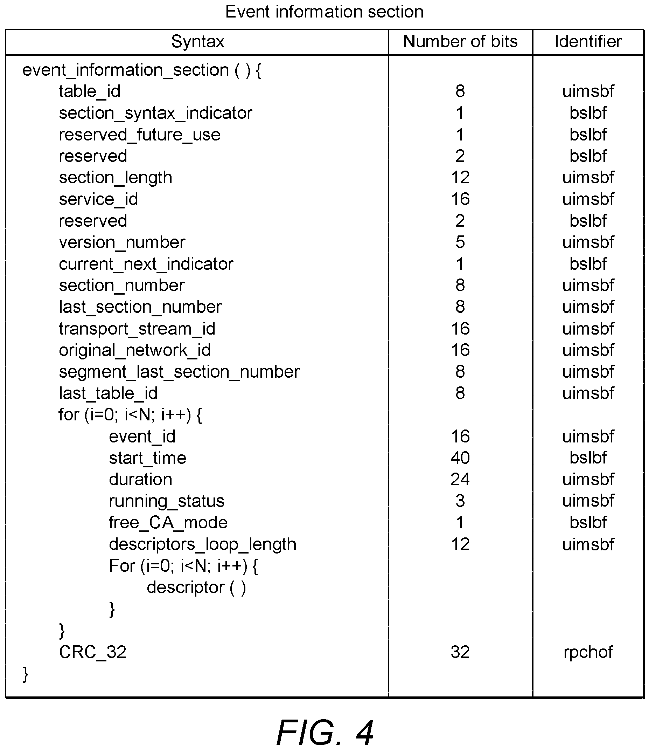

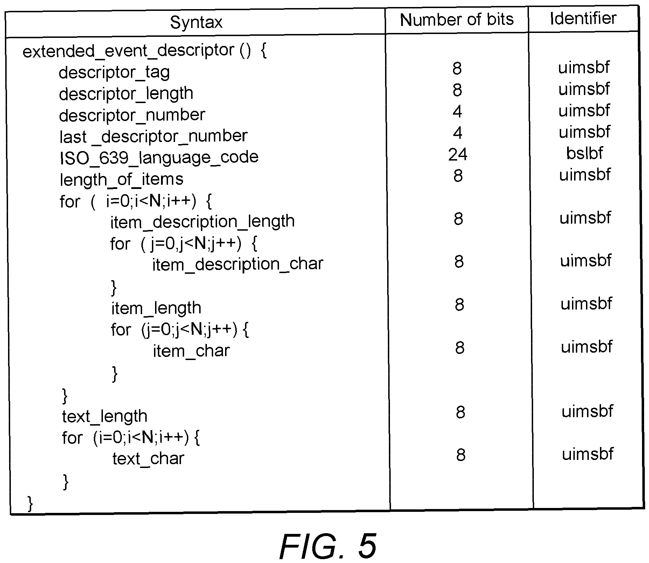

The additional program metadata used to implement embodiments of the invention may be provided in the EIT table the format of which, according to the DVB-SI format, is shown in Figure 4. In particular, the program metadata is provided within descriptors in the table. Most preferably, the data fields and accompanying data, such as the text data, for a particular program are provided within one or more extended event descriptors within the EIT. The format of the EIT extended event descriptor is shown in Figure 5 as provided by the DVB-SI standard. The descriptor, or multiple descriptors, contain descriptions of various properties of a program or event. Each property is defined by a particular metadata field, with accompanying data representing the description of that property/data field for a given program or event. The data within the descriptor(s) is typically parsed so as to produce a two columned table for each program indicating the data field and the accompanying description for that program.

The required metadata identifying a given programme or event as being continued on a different channel can therefore be formatted and inserted into the extended event descriptor. The additional metadata is inserted into the broadcast transport stream or multiplexor prior to broadcast by the broadcaster or an associated entity. This can be performed at the head end before broadcast to the one or more user devices. Alternatively, since metadata may be provided in manners other than via broadcast the additional metadata may be provided via a different route such as via a network and particularly over the internet.

It is possible that the additional metadata is located in another table, or one or more other tables, such as any of the DVB-SI data tables mentioned above.

Wherever the additional metadata is located, a STB according to embodiments of the present invention is configured to perform a look up of the predetermined additional metadata field "continuation bit". If this bit is set then a further look up of the relevant fields is performed, and particularly of the "continuation event start time" field and the "continuation event channel" date.

It should be noted that in certain embodiments the presence of a "continuation bit" field may not be required, as the fact that a programme is continued on another channel can be inferred from the population of data in one of the other additional metadata fields. For example, if the "continuation event start time" field is populated with a start time, rather than being empty, the STB CPU may be configured to infer that a programme spans two channels. Thus the CPU may be configured to check whether there is a start time for a second portion of the programme, this being indicative that the programme is split over multiple channels. Likewise, if the continuation channel is populated with a channel number or identifier then this could be used as being indicative of a continuation of a programme on another channel.

When a channel is selected by a user the STB CPU performs a lookup of at least one of the additional metadata fields. Taking the example of Figure 2, PR1 201 is selected and the STB identifies that the continuation bit has been set by the broadcaster or associated entity. This triggers the CPU to determine the time at which the changeover should occur to the second channel. This is performed by comparing the start time of the second portion, as indicated by the STB internal clock source or an external clock source. When the specified changeover time is reached, the CPU sends a signal to the tuner and/or demodulator and/or demultiplexor as appropriate to extract from the received transport stream the desired event, as indicated by the channel/event/service field in the additional metadata, in this example being the second portion of PR1 202.

Referring back to Figure 1, the STB shown includes multiple tuner/demodulator combinations that may also include demultiplexors for extracting a desired stream or programme from a transport stream. The provision of multiple tuners/demodulators/demultiplexors, or the functionality to simultaneously decode and demodulate multiple programmes from different channels can be leveraged by embodiments of the present invention. For example, embodiments have been described in which the AV output of an STB is changed when a programme is spread over multiple channels. Rather than change the output of the STB to a display, where the STB contains DVR functionality to record received broadcast content the STB may instead be arranged to record the second portion of the programme to a recording medium such as hard disk 110 such that the user can decide to continue watching the programme when they realise the channel on which it is broadcast has changed. STBs with DVR functionality may also offer the functionality to time shift content by recording to a storage medium whilst simultaneously playing back the programme from an earlier position, and this functionality can also be utilised here. If the user realises that the programme has switched to a different channel they can use the time shift functionality to watch the programme from the point of switchover, or some later point, whilst continuing to record the remainder of the programme as it is broadcast.

It is possible that a given programme may be divided up amongst more than two channels, in which case each portion of the programme having a following portion on another channel may be appropriately associated with accompanying additional metadata such that the end time of that portion, or the starting time of the following portion, and the channel on which the next portion is being broadcast can be identified. If more portions of a programme are used then each additional portion may be embodied or treated in the manner described above for the second portion of a two-portion programme.

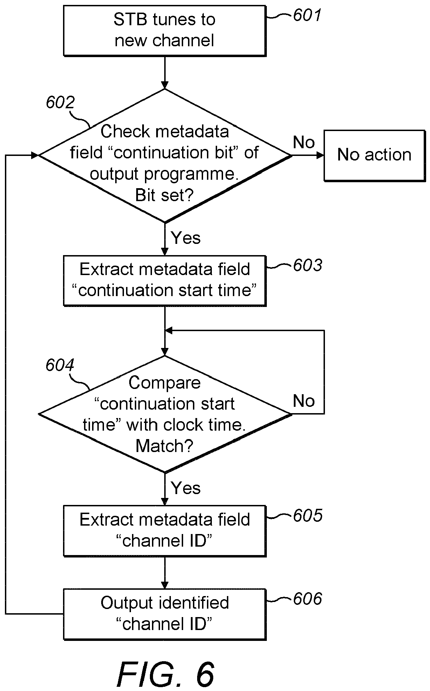

Figure 6 shows an example of a method implemented by a user device such as a STB according to embodiments of the present invention. At the initial step 601, the STB is tuned to a new channel. This may be due to user selection of a new channel, such as channel 1 in the example of Figure 2. A check 602 of the metadata field indicative of whether the programme is continued on a different channel is then performed. If there is no indicative data, for example, the continuation bit is not set, then no further action is required. If, however, the check reveals data indicative of the programme being continued on another channel, then the start time of the continued portion of the programme is extracted from the additional metadata at step 603, or alternatively the finish time of the first portion is extracted, depending upon which field is provided. The extracted time value is compared against the clock time available to the STB at step 604. This may be performed repeatedly or periodically until the extracted start time is reached, or until a predetermined period prior to the extracted start time. Once the start time has been reached, or the predetermined period prior to the start time has been reached, the channel identification of the second portion is extracted at step 605 and the channel being output by the STB is changed to the one indicated by the extracted data at step 606. For programmes that are spread across more than two channels, the method may revert to step 602 to determine whether the metadata associated with the second portion of the programme, or second event within the programme, also contains metadata indicative of the fact that the programme continues on another channel. In this way programmes may be spread across multiple channels whilst maintaining an automatic switch over between portions.

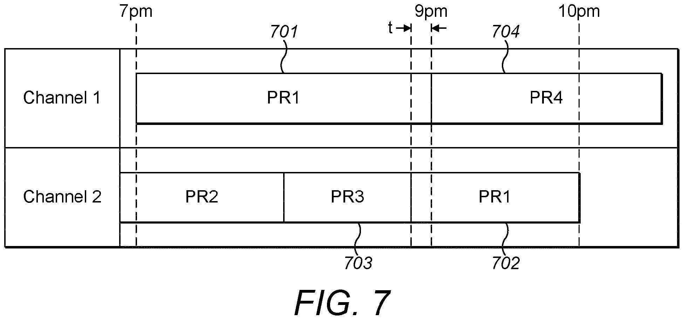

Although embodiments of the invention have been described in which the first portion of the programme finishes at the same time as the second portion of the programme begins a situation such as that shown in Figure 7 is also possible. Figure 7 shows a similar example programme scheduled to the one shown in Figure 2, the difference here being that there is an overlap between the end of the first portion of programme 1, 701, and the beginning of the second portion of programme 1, 702, on the second channel. Such a time period of overlap, in which the same content is simultaneously being output on both channels, allows users without automatic switch over capability a buffer period in which they can switch over without missing any content. The start time of PR1, 702, or the end time of PR1, 701, as required by the additional metadata according to embodiments of the invention may be specified at any point during the time of overlap. This period is shown as period "t" in Figure 7. Preferably the start/end time is specified at a point that is a predetermined period after the start of the overlap period and a predetermined period before the end of the overlap period, and more preferably midway through the overlap period, to reduce the risk of missing any of the programme.

Embodiments of the invention have been described in the context of receiving programmes, and particularly television programmes, by broadcast. The term "programme" is intended to refer to media content comprising video and/or audio and so may equally be applied to, for example, radio programmes. The term "broadcasting" should be taken to encapsulate data of its delivery by any form such as over the air, via cable or satellite, or via a network connection such as the internet or any other type of transmission. An internet "channel" may refer to content streamed or downloaded from a particular website identified by a particular IP address.

The term "event" as used herein is used in the context of the DVB-SI standard and refers to a grouping of elementary broadcast data streams with defined start and end times. A programme, such as a television programme, is intended to refer to a concatenation of one or more such events under the control of a broadcaster. A "service" as used herein may refer to a sequence of programmes and may be considered to be a channel, being a sequence of programmes coordinated by a broadcaster.

## Claims

1. A method for controlling a user device for receiving broadcast media content and outputting it for presentation to a user, the method comprising, at the user device:
- receiving and outputting a first portion of a broadcast media content programme, a second portion of the media content programme being subsequently broadcast on a second channel;
- receiving programme metadata identifying:
- that the first portion of the media content programme is continued as a second portion of the media content programme;
- the second channel on which the second portion of the media content programme is to be broadcast; and
- a time at which the second portion of the media content programme begins;
- the method further comprising automatically controlling the user device, based on the received metadata, to receive via broadcast, and output, the second channel to output the second portion of the media content programme.

2. A method according to claim 1 wherein the user device is controlled to output the second channel at a time determined based on the time at which the second portion of the media content programme begins as specified in the metadata.

3. A method according to claim 1 or 2 wherein the received data is received as part of electronic programme guide metadata, preferably provided according to the DVB-SI standard.

4. A method according to claim 3 wherein the received data is contained within an Event Information Table (EIT).

5. A method according to claim 4 wherein the received data is contained within an extended event descriptor.

6. A method according to claim 3, 4 or 5 wherein the received data includes a data field containing a continuation bit which when set indicates that the media content programme is continued on a second channel, and further containing data fields including the channel on which the media content is to be broadcast and the time at which the broadcast is to begin.

7. A method according to any of claims 1 to 5 wherein the metadata identifying that the first portion of the media content programme is continued as a second portion of the media content programme comprises the data identifying the second channel on which the second portion of the media content programme is to be broadcast or the data identifying the time at which the second portion of the media content programme begins, one or both of these data being used to infer that the media content programme is continued as a second portion.

8. A method according to any preceding claim wherein the received media content programmes are output for presentation to a user or output to a recording medium.

9. A method according to any preceding claim wherein the user device is a set top box and the broadcast media content programme is a television programme.

10. A method for providing programme metadata for use in a method according to any of claims 1 to 9, the method comprising:
- inserting into one or more programme metadata tables:
- data identifying that a first portion of a media content programme is continued as a second portion of the media content programme;
- data identifying the channel on which the second portion of broadcast media content is to be broadcast; and
- data identifying a time at which the second part of the media content programme begins.

11. A method according to claim 10 wherein the metadata is inserted into an Event Information Table (EIT), and preferably into an extended event descriptor.

12. A method according to claim 10 or 11 wherein the method includes inserting, into the one or more metadata tables, a data field containing a continuation bit which when set indicates that the media content programme is continued as a second portion of media content on a second channel, a data field for containing the channel on which the second portion of the media content is to be broadcast and a data field for containing the time at which the broadcast is to begin, the method further comprising, for a particular portion of media content, setting the continuation bit and inserting into the respective data fields the broadcast channel of the second media content portion and the broadcast start time of the second media content portion.

13. A set top box for receiving broadcast media content and outputting it for presentation to a user, the set top box being configured to:
- receive and output a first portion of a broadcast media content programme on a first channel, a second portion of the media content programme being subsequently broadcast on a second channel;
- receive programme metadata and extract from the received metadata data identifying whether the first portion of the media content programme is continued as a second portion of the media content programme and if so, to extract from the received metadata:
- the second channel on which the second portion of the media content programme is to be broadcast; and
- a time at which the second portion of the media content programme begins;
- the set top box being further configured to automatically output the second channel, based on the data extracted from the received metadata, to receive, via broadcast, and output the second portion of the media content programme.

14. A set top box according to claim 13 configured to undertake the method of any of claims 1 to 9.

15. A computer programme which when executed on a set top box according to claim 13 or 14 causes it to undertake the method of any of claims 1 to 9.
